# EUROPÄISCHE PATENTSCHRIFT

(11) **EP 1 279 076 B1**
(45) Veröffentlichungstag und Bekanntmachung des Hinweises auf die Patenterteilung: **19.05.2004**
(21) Anmeldenummer: 01933673.4
(22) Anmeldetag: 09.03.2001
(51) Int. Cl.: G05B 19/00

(54) **STEUERUNGSVERFAHREN UND INDUSTRIELLE PRODUKTIONSANLAGE MIT WEB-STEUERUNGSSYSTEM**
CONTROL METHOD AND INDUSTRIAL PRODUCTION INSTALLATION WITH WEB CONTROL SYSTEM
PROCEDE DE COMMANDE ET INSTALLATION DE PRODUCTION INDUSTRIELLE EQUIPEE D'UN SYSTEME DE COMMANDE PAR LE WEB

(30) Priorität: 10.03.2000 DE 20004370 U
(43) Veröffentlichungstag der Anmeldung: 29.01.2003
(73) Patentinhaber: KUKA Schweissanlagen GmbH, 86165 Augsburg (DE)
(72) Erfinder: BIRKLE, Fritz, 87719 Mindelheim/Nassenbeuren (DE)
(74) Vertreter: Ernicke, Hans-Dieter, Dipl.-Ing.
(86) Internationale Anmeldenummer: PCT/EP2001/002653
(87) Internationale Veröffentlichungsnummer: WO 2001/067190

(56) Entgegenhaltungen:
- EP-A- 0 825 506
- WO-A-01/30022
- WO-A-99/63409
- DE-A- 19 615 190
- DE-U- 29 600 609
- LARSEN A K: "THE NEXT WEB WAVE: NETWORK MANAGEMENT" , DATA COMMUNICATIONS, MCGRAW HILL. NEW YORK, US, VOL. 25, NR. 1, PAGE(S) 31-32,34 XP000545237 ISSN: 0363-6399 Zusammenfassung

## Beschreibung

Die Erfindung betrifft ein Steuerungsverfahren und eine industrielle Produktionsanlage, insbesondere zur Fertigung von Bauteilen von Fahrzeugrohkarosserien, mit den Merkmalen im Oberbegriff des Verfahrens- und Vorrichtungshauptanspruchs.

Ein solches Steuerungsverfahren und eine industrielle Produktionsanlage sind aus der EP-A-0 825 506 bekannt. Die Produktionsanlage besitzt eine Anlagensteuerung in Form eines sogenannten Server Digital Data Processor und mehrere Applikationskomponenten. Die Anlagensteuerung ist als speicherprogrammierbare Steuerung (SPS) ausgebildet und ist mit Eingabegeräten und Anzeigegeräten über ein Netzwerk verbunden. Die Anlagensteuerung und die Eingabeund Anzeigegeräte sind mit Internet-WEB-Browsern ausgerüstet, wobei die Kommunikation in diesem Netzwerk nach Internet-Standards unter dem TCP/IP-Protokoll erfolgt. Hierbei werden allerdings nur Informationen und Programme ausgetauscht. Das Netzwerk beschränkt sich auf die Anlagensteuerung und die Eingabe- und Anzeigegeräte. Die Applikationskomponenten werden von der Anlagensteuerung in konventioneller Weise mit einem proprietäten Bus-System gesteuert. Für jede Anwendung ist ein spezielles Steuerungsprogramm zu erstellen. Spezielle Applikationen, wie Punktschweißen, Kleben, Bolzenschweißen usw. werden mit speziellen Applikationssteuerungen gesteuert. Hierfür werden ebenfalls spezielle Softwareprogramme erstellt und eingesetzt. Für den Informationsaustausch mit den Sensoren und Aktoren sowie zwischen den einzelnen Steuerungen der Applikationskomponenten werden ebenfalls proprietäre Bussysteme verwendet. Die vorbekannte Produktionsanlage erfordert einen hohen Aufwand bei der Projektierung, der Konstruktion, dem Aufbau und der Inbetriebnahme. Die intelligenten Anlagenkomponenten sind als proprietäre und nicht kompatible Systeme sehr teuer. Für jede Produktionsanlage und für jede Applikation ist eine spezielle Hardware und Software zu projektieren, konstruieren, zu bauen und in Betrieb zu nehmen. Eine Informationsbereitstellung von der Komponentenebene bis zur Werksebene ist zudem nur mit sehr großem Aufwand möglich. Der Betreiber einer Produktionsanlage muss zudem speziell mit den entsprechenden Steuerungen und Bedienund Beobachtungsgeräten vertraut gemacht werden.

Die WO 99/63409 zeigt ein anderes Steuerungsverfahren und einen anderen Aufbau einer industriellen Produktionsanlage. Die Anlagensteuerungen oder sog. Ablaufsteuerungen sind in Controllern enthalten, welche eine CPU mit Speichern besitzen. Die Controller sind untereinander durch ein konventionelles und fest verdrahtetes Bus-System miteinander verbunden. Die einzelnen Maschinenkomponenten sind über Schnittstellen an den Controller angeschlossen und werden ebenfalls durch ein konventionelles und fest verdrahtetes Bus-System angesprochen. Die Controller mit ihren angeschlossenen Maschinenteilen können einerseits als relative einfache Maschinensteuerung und andererseits als komplexere Anlagensteuerung mit mehreren integrierten Einzelmaschinen ausgebildet sein. Alle Steuerprogramme sind in den Controllern und den Speichern hinterlegt und können über eine Tastatur oder dergleichen umprogrammiert und auf ein Display sichtbar gemacht werden. Die Programme selbst sind hierbei in ein oder mehreren Speichern abgelegt und werden über Steuerblocks ausgeführt. Die von den Controllern gebildeten in sich geschlossenen Steuerungssysteme sind zwar mit einem WEB-Server und eigenen Home Pages gemäß Internet-Standard ausgestattet und sind auch über entsprechende Netzwerkinterfaces am Netzwerk angeschlossen, welches ebenfalls dem Internet-Standard unterliegt und das TCB-IP-Protokoll fährt. An das Netzwerk ist ferner ein Computer mit einem Internet tauglichen Interface sowie einem WEB-Browser gemäß Internet-Standard verbunden und kann auf die Home Pages der angeschlossenen Steuerungssysteme via Netzwerk zugreifen und diese auf einem Monitor zur Anzeige bringen. Der Bediener hat außerdem die Möglichkeit, am Computer auf diese Home Pages der Steuersysteme zuzugreifen und hier durch Drücken von Buttons Vorgänge auszulösen, z.B. einen Reset zu fahren. Der Computer ist jedoch ein reiner Client-Computer, der lediglich zum Austausch von einfachen Informationen oder Nachrichten über das Netzwerk dient. Im Computer ist jedoch keine Ablaufsteuerung enthalten. Es werden auch keine Steuersignale zwischen dem Computer und den angeschlossenen Steuersystemen ausgetauscht.

Ähnliche Steuerungsverfahren und Aufbauten von industriellen Produktionsanlagen zeigen auch die DE-A-196 15 190 und die DE-U-296 00 609. Auch hier werden nur Zustandsmeldungen und einfache Nachrichten über das Netzwerk mit dem TCP-IP-Protokoll ausgetauscht.

Die nachveröffentlichte WO 01/30022 befasst in allgemeiner Form mit Datentransfers in einem Internet tauglichen Netzwerk. Eine Steuerung von Maschinenteilen in einer industriellen Produktionsanlage und deren Anlagenaufbau sind hierbei nicht angesprochen.

Es ist Aufgabe der vorliegenden Erfindung, eine solche industrielle Produktionsanlage zu verbessern.

Die Erfindung löst diese Aufgabe mit den Merkmalen im Hauptanspruch.
Der Einsatz eines WEB-Steuerungssystems zwischen der Anlagensteuerung und den intelligenten Applikationskomponenten an Stelle der bisherigen proprietären Bussysteme hat den Vorteil, dass der Aufwand auf der Hardware- und Softwareseite für Projektierung, Konstruktion, Bau und Inbetriebnahme der Produktionsanlage wesentlich verringert wird. Entsprechend niedriger liegen die Kosten. Für das WEB-Steuerungssystem werden Internet-kompatible Techniken bei Hardware und Software eingesetzt, die aus der Bürowelt stammen und in einer großen Bandbreite mit niedrigen Kosten zur Verfügung stehen. Die Techniken gehorchen den verbreiteten Internet-Standards. Sie sind untereinander kompatibel und als allgemeiner Standard offen. Sie sind ausgetestet und haben eine hohe Betriebssicherheit.

Die Anlagensteuerung kann über das WEB-Steuerungssystem die intelligenten Applikationskomponenten in Echtzeit steuern. Hierbei werden Steuerbefehle, Rückmeldungen und dgl. für eine direkte Steuerung erforderliche Informationen zwischen der Anlagensteuerung und den Applikationskomponenten ausgetauscht. Zusätzlich können Zustandsmeldungen, Geräteinformationen, Programme und dgl. übertragen werden.

Durch eine solche Standardisierung wird nicht nur der Projektierungs- und Programmieraufwand durch den Wegfall der proprietären Systeme wesentlich verringert. Auch die Bedienung und Wartung durch den Anlagennutzer wird vereinfacht und erleichtert. Hierbei wirkt sich auch eine einheitliche Benutzeroberfläche positiv aus. Mit Browsern und Homepages sind die Anlagennutzer und die Mitarbeiter häufig bereits vertraut. Diese aus der Nutzung des Internets bekannte und gewöhnte Technik erleichtert die Benutzung der Produktionsanlage. Durch die Standardisierung fallen auch Umstellungen auf neue Anlagen oder Änderungen in vorhandenen Produktionsanlagen leichter.

Das WEB-Steuerungssystem hat den besonderen Vorteil, dass es über die Homepages eine Beobachtung und Diagnose aller angeschlossenen intelligenten Anlagenkomponenten an jedem mit einer geeigneten Anzeige ausgestatteten WEB-Server und auch an jedem eventuell vorhandenen separaten Anzeige- und Bediengerät im System ermöglicht. Darüber hinaus kann auch über eine Anbindung an ein gleichartiges Werksnetz oder an andere angeschlossene gleichartige Datennetze eine Beobachtung und Diagnose an jeder beliebigen geeigneten Stelle in diesen Netzen erfolgen. Darüber hinaus kann grundsätzlich auch von jedem Anzeige- und Bediengerät im WEB-Steuerungssystem und in den anderen angeschlossenen gleichartigen Datennetzen eine Bedienung und Steuerung der einzelnen intelligenten Anlagenkomponenten erfolgen. Dies kann allerdings aus anderen Gründen, z.B. sicherheitstechnischen Vorgaben, eingeschränkt werden. Diese potenziellen Eingriffsmöglichkeiten schließen die unterschiedlichsten Beeinflussungsformen ein, z.B. eine Handsteuerung, eine Umprogrammierung, ein Überspielen oder Austauschen von Programmen, ein Ändern von Parametern und dergleichen.

Ein WEB-Steuerungssystem kann nicht nur zwischen der oder den Anlagensteuerung(en) und den einzelnen Steuerungsteilen der intelligenten Applikationskomponenten bestehen. Ein solches WEB-Steuerungssystem kann auch innerhalb der intelligenten Applikationskomponenten vorhanden sein, wobei die Steuerungsteile in der vorbeschriebenen Weise die ebenfalls mit geeigneten Intelligenzen ausgerüsteten Geräteteile der Applikationskomponeten steuern. Das auf Anlagenebene bestehende WEB-Steuersystem mit seinem Datennetz und das innerhalb der einzelnen Anlagenkomponenten vorhandene WEB-Steuersystem mit entsprechendem Datennetz (Fast-Ethernet-Leitungen) können miteinander verknüpft werden. Die Transparenz und die Steuerungsmöglichkeiten der Produktionsanlage werden dadurch noch weiter gesteigert.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Produktionsanlage mit mehreren intelligenten Anlagenkomponenten,
- Figur 2:: eine Homepage der Produktionsanlage und der intelligenten Anlagenkomponenten,

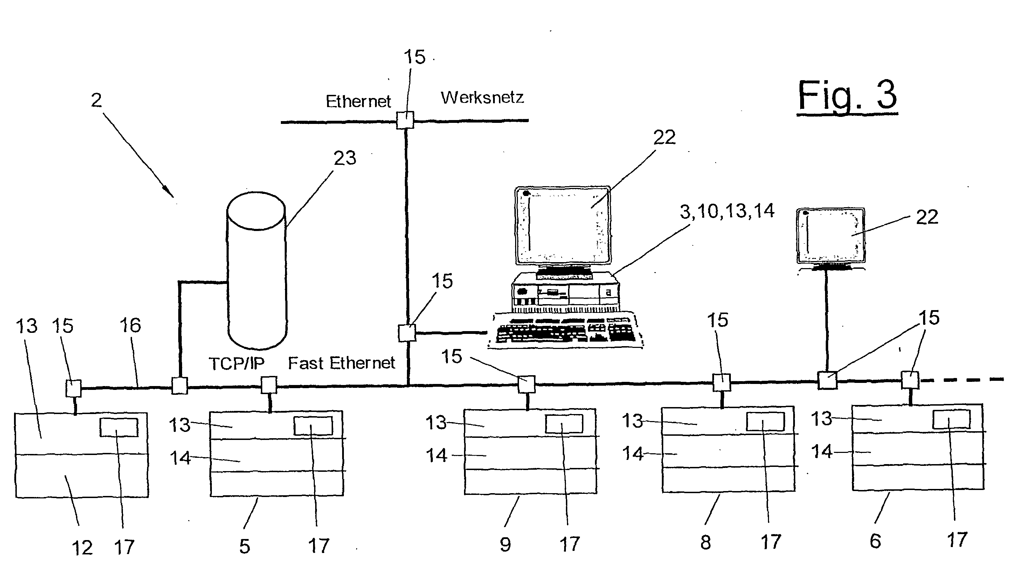

- Figur 3:: eine Abbildung der Steuerungsarchitektur des WEB-Steuerungssystems,
- Figur 4:: eine Strukturdarstellung der Homepages,
- Figur 5:: ein WEB-Steuerungssystem mit Ablaufsteuerung und Werkzeug mit Embedded-Chip,
- Figur 6:: eine Variante von Figur 5 mit intelligentem Interface und
- Figur 7:: ein Teil der Produktionsanlage von Figur 1 in Seitenansicht.

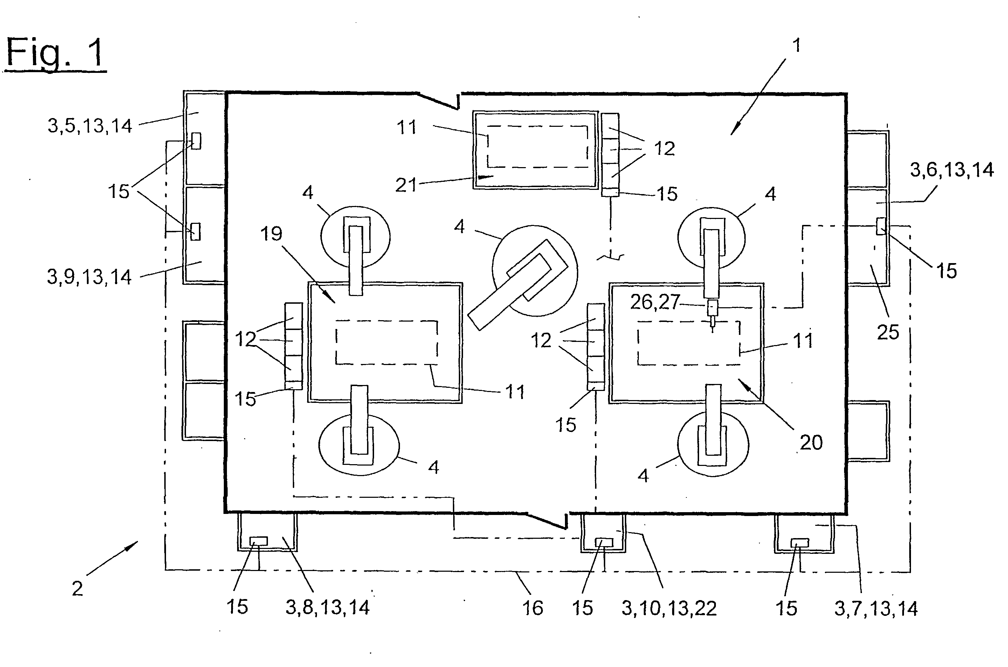

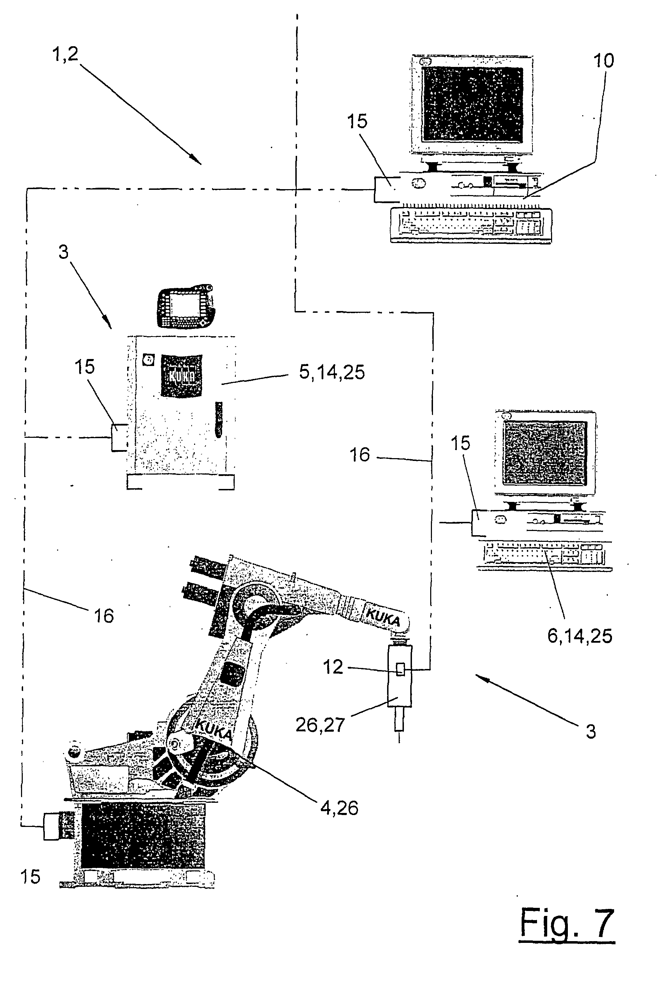

In Figur 1 und 7 ist eine industrielle Produktionsanlage (1) schematisch dargestellt. Sie wird vorzugsweise in der Automobilindustrie eingesetzt und dient zur Fertigung von Bauteilen von Fahrzeugrohkarosserien. Die Bauteile sind der Übersicht wegen nicht dargestellt. Die Produktionsanlage (1) ist im gezeigten Ausführungsbeispiel als Produktionszelle ausgebildet, kann aber auch eine beliebige andere Form und Ausgestaltung haben. In der Produktionsanlage (1) sind drei Bearbeitungsbereiche (19,20,21) für die Bauteile angeordnet, wobei die Bauteile über eine Bauteilablage (nicht dargestellt) zugeführt und nach der Bearbeitung wieder abgeführt werden. Darüber hinaus können weitere und andere Übergabestellen für Bauteile, Werkzeuge und andere Elemente vorhanden sein.

In der Produktionsanlage (1) können beliebige Prozesse stattfinden, z.B. Handhabungs- und Bearbeitungsprozesse. Die Bearbeitungen können ebenfalls beliebiger Art sein, z.B. Punktschweißen, Schutzgasschweißen, Kleben, Montieren, spanabhebende Bearbeitung, etc..

Die Produktionsanlage (1) hat mindestens eine Anlagensteuerung (10) und mehrere intelligente Applikationskomponenten (3), die als Bearbeitungsvorrichtungen ausgebildet sind. Die intelligenten Applikationskomponenten (3) werden von der Anlagensteuerung (10) mit einem WEB-Steuerungssystem (2) gesteuert und sind durch ein Datennetz (16) miteinander verbunden.

Das WEB-Steuerungssystem (2) besteht aus mehreren, den intelligenten Applikationskomponenten (3) zugeordneten WEB-Servern (13) mit jeweils mindestens einer zugehörigen Homepage (17) und mit mindestens einer Schnittstelle (15) für den Anschluss an das Datennetz (16). Hierbei hat vorzugsweise jede intelligente Anlagenkomponente (3) einen eigenen WEB-Server (13) mit mindestens einer eigenen Homepage (17). Den WEB-Servern (13) können geeignete Anzeige- und Bediengeräte (22) zugeordnet sein. Alternativ oder zusätzlich können ein oder mehrere separate Anzeigeund Bediengeräte (22) vorhanden und an das Datennetz (16) angeschlossen sein.

Die Anzeige- und Bediengeräte (22) und die WEB-Server (13) sind mit einer geeigneten Kommunikationssoftware ausgerüstet. Auf den Anzeige- und Bediengeräten (22) sind insbesondere WEB-Browser zur Darstellung und Bedienung der zugehörigen Homepages (17) installiert. Das Datennetz (16) ist vorzugsweise als Fast Ethernet-Datennetz unter Benutzung des TCP/IP-Protokolls ausgelegt. Auch die Schnittstellen (15) sind entsprechend ausgelegt und z.B. als Fast Ethernet-Steckkarten ausgebildet. Die vorgenannten Komponenten entsprechen hinsichtlich Software und Hardware den gängigen Internet-Standards. Bei einer Änderung der Internet-Standards kann eine entsprechende Anpassung der Komponenten erfolgen.

Die intelligenten Applikationskomponenten (3) bestehen jeweils aus einem Steuerungsteil (25) und einem Geräteteil (26). Für die Steuerung der gesamten Produktionsanlage (1) ist mindestens eine Anlagensteuerung (10) vorhanden, die im gezeigten Ausführungsbeispiel aus einem Industrie-PC mit einer darauf laufenden softwarebasierte Ablaufsteuerung besteht. Auf der Ablaufsteuerung läuft mindestens ein Anwendungs- oder Ablaufprogramm. Vorzugsweise hat zumindest die Anlagensteuerung (10) auch ein Anzeige- und Bediengerät (22). Die Anlagensteuerung (10) steuert vorzugsweise alle intelligenten vorhandenen Applikationskomponenten (3) über das gemeinsame Fast Ethernet Datennetz (16). Die Steuerung erfolgt dabei in anwendungsbezogener Echtzeit.

Die WEB-Server (13) haben jeweils eine eigene IP-Adresse und sind direkt ansprechbar. Im Datennetz (16) können Bridges und Rooter integriert sein, mit denen das gesamte Datennetz (16) in kleinere deterministische Datennetze segmentiert werden kann. Zudem steuern die Rooter den Datenverkehr unter Prioritätsvorgaben und erteilen den zeitkritischen Steuerdaten Vorrang vor anderen Daten. Hierdurch kann ein sehr schneller und zielgerichteter Austausch der Steuerdaten erreicht werden. Die bei den Steuerungsvorgängen ausgetauschten Steuerdaten bestehen z.B. aus Steuerbefehlen der Steuerungen (10,14,25) und Rückmeldungen der angesprochenen Empfänger. Dies können z.B. Empfangsbestätigungen sein, wobei auch ein sogenannter Handshake zur Kontrolle und Sicherung des Datenverkehrs ausgeführt wird. Die Empfänger melden außerdem den Vollzug der Steuerbefehle an die Steuerungen (10,14,25) zurück, was ebenfalls mit Handshake überwacht wird. Im weiteren können auch Diagnose-Daten, Programme oder dgl. andere Daten ausgetauscht werden.

Zudem sind in die WEB-Server (13) spezielle Softwaremodule implementiert, die auf dem TCP/IP-Protokoll aufsetzen und für den Austausch der Steuerdaten in anwendungsbezogener Echtzeit sorgen, indem sie die Steuerdaten in geeigneter Weise zusammenfassen, ordnen, ggf. straffen und in geeignete Datenpakete gruppieren, um den normalerweise nicht sehr schnellen Datenverkehr unter dem TCP/IP-Protokoll zu beschleunigen.

Die intelligenten Applikationskomponenten (3) in der gezeigten Produktionsanlage (1) können als unterschiedliche und beliebige Bearbeitungseinrichtungen ausgebildet sein. Sie bestehen zum einen in der gezeigten Ausführungsform aus mehreren mehrachsigen Robotern (4) nebst mindestens einer Robotersteuerung (5), welche die Bauteile mit geeigneten Werkzeugen (27) handhaben und/oder bearbeiten, z.B. greifen, transportieren, spannen, fügen, schweißen, kleben, etc.. In Figur 1 und 7 ist z.B. ein Schweißwerkzeug (27) schematisch dargestellt.

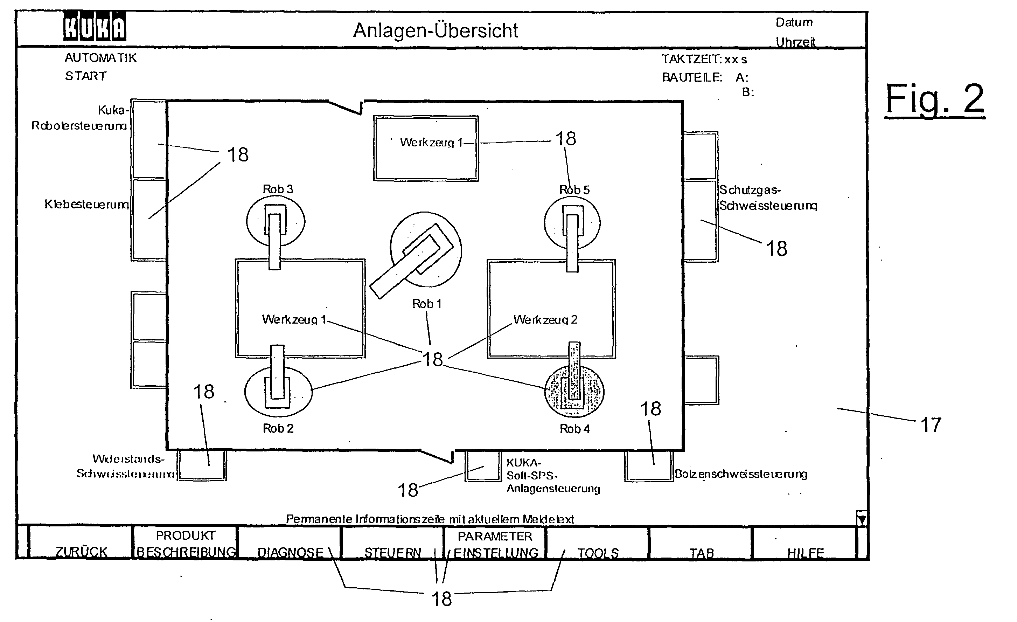

Die intelligenten Applikationskomponenten (3) umfassen weitere Bearbeitungseinrichtungen, die aus robotergeführten oder stationär angeordneten Geräteteilen (26) oder Applikationswerkzeugen und aus zugehörigen Prozesssteuerungen (25,14) bestehen. In Figur 1 und 2 sind hierzu eine Schutzgas-Schweißsteuerung (6), eine Widerstands-Schweißsteuerung (8), eine Bolzenschweißsteuerung (7) und eine Klebesteuerung (9) dargestellt. Die genannten Applikationskomponenten (3) umfassen ferner geeignete Betriebsmittelversorgungen, z.B. eine Zuführung für Schweißdraht, Schutzgas, Schweißstrom, etc.

Zu den intelligenten Applikationskomponenten (3) zählen ferner die an jedem Bearbeitungsbereich (19,20,21) vorhandenen Werkstückaufnahmen und deren Werkzeuge (11) insbesondere Spannwerkzeuge. Sie sind z.B. direkt mit der Anlagensteuerung (10) verbunden. Die Anlagensteuerung (10) kann für diese Werkzeuge (11) die einzige und direkt einwirkende Steuerungskomponente (25) sein. Die Anlagensteuerung (10) bildet hierbei das Steuerungsteil (25) und das Werkzeug (11) das Geräteteil (26) der intelligenten Applikationskomponente (3).

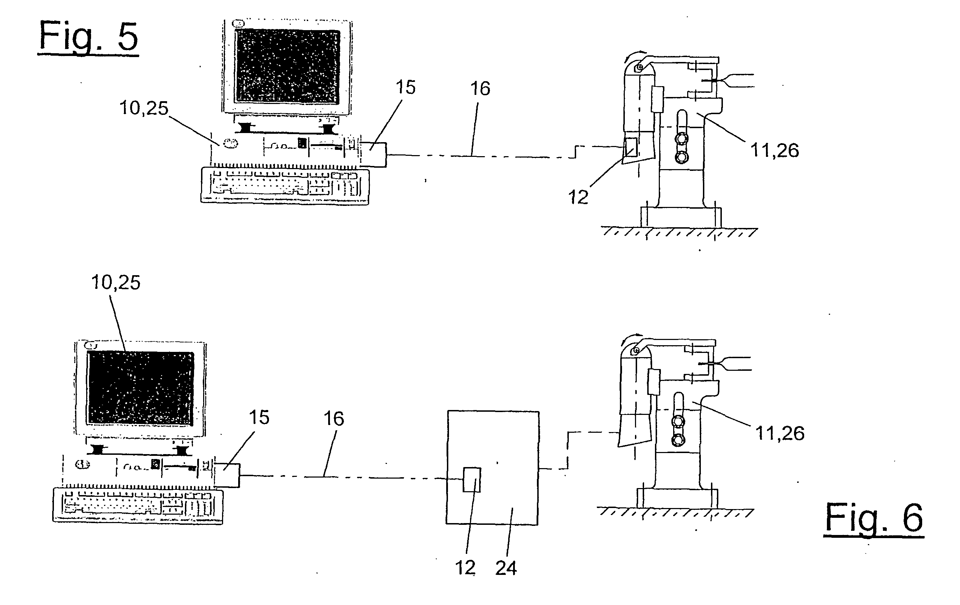

In einer ersten und in Figur 5 dargestellten Ausführungsform sind die Werkzeuge (11), hier Spanner, mit einer beschränkten Intelligenz (12), z.B. einem sogenannten Embedded-Chip zu versehen. Dessen Funktionen werden nachfolgend im Einzelnen beschrieben. In der Variante von Figur 6 ist das Werkzeug (11) an ein Interface (24) angeschlossen, welches eine geeignete Intelligenz (12), z.B. einen Embedded-Chip besitzt. Hierbei können auch mehrere Werkzeuge (11) ein gemeinsames Interface (24) haben. In einer nicht dargestellten Alternative können die Werkzeuge (11) in einer höherwertigen Ausführung auch eine umfangreichere eigene Intelligenz (12) bzw. Steuerung aufweisen.

An das Datennetz (16) kann zudem ein Anlagen-Server (23) über eine Schnittstelle (15) angeschlossen sein.

Die Steuerungsteile (25) der intelligenten Applikationskomponenten (3) besitzen jeweils mindestens einen Rechner (14), der vorzugsweise als Personalcomputer, insbesondere Industrie-PC, oder in einer einfacheren Ausführung als Mikroprozessor ausgebildet ist. Die Rechner (14) können direkt angeschlossene geeignete Ein- und Ausgabegeräte (22) besitzen, sog. MMI's (Mensch-Maschine-Interfaces). Dies sind z.B. eine Tastatur, eine Maus, ein Markierstift und geeignete Anzeigegeräte, die vorzugsweise als graphikfähige Bildschirme, z.B. als Touch-Screens, ausgebildet sind.

Im gezeigten Ausführungsbeispiel besitzt die Anlagensteuerung (10) einen eigenen PC. In einer nicht dargestellten Variante kann die Anlagensteuerung (10) auch als softwarebasierte Ablaufsteuerung ausgeführt sein, die auf einer anderen intelligenten Applikationskomponente (3), z.B. der Robotersteuerung (5), läuft. In diesem Fall kann das Anzeige- und Bediengerät (22) der intelligenten Applikationskomponente (3) auch für die Anlagensteuerung (10) verwendet werden. In einer weiteren Variante kann eine konventionelle SPS-Anlagensteuerung mit einer geeigneten Anpassung oder Ergänzung für die Integration eines WEB-Servers (13) eingesetzt werden.

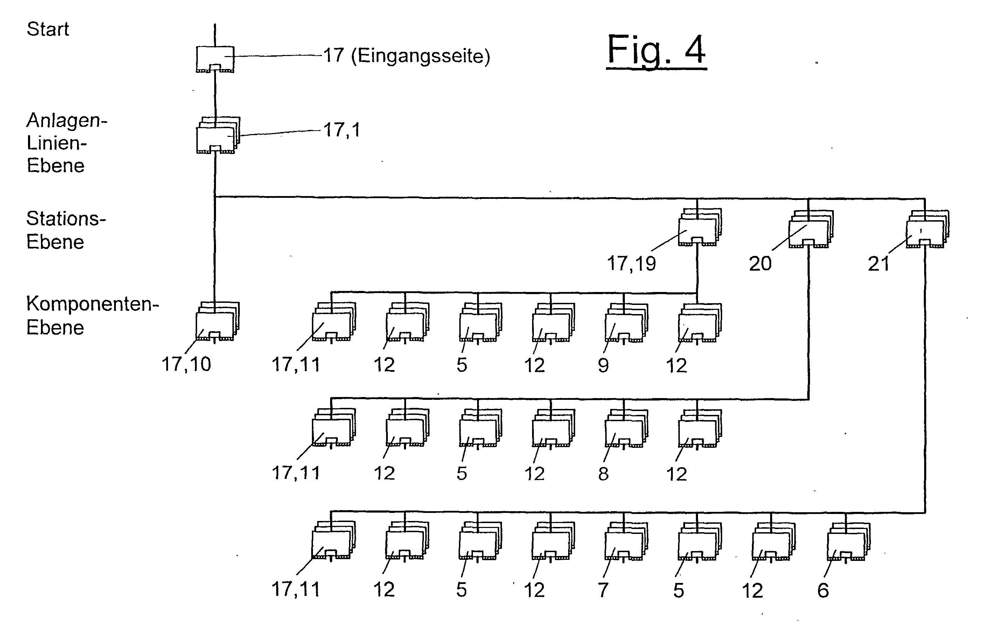

Die intelligenten Applikationskomponenten (3) bzw. deren Steuerungsteile (25) oder Rechner (14) beinhalten den vorgenannten WEB-Server (13) mit Server- und Client-Funktion und mit zumindest einer zur Applikationskomponente (3) gehörigen Homepage (17) mit ein oder mehreren dynamischen Feldern (18) oder Buttons mit Links. Der Homepage (17) können mehrere hierarchisch gegliederte weitere Homepages unterlagert sein. Die Anzeige- und Bediengeräte (22) und insbesondere die zusätzlichen Geräte können eine reine Client-Funktion haben. Sie sind mit einem Browser zur Darstellung von HTML- oder XML-Homepageseiten ausgestattet. Figur 2 zeigt die vorzugsweise allen WEB-Servern (13) gemeinsame Homepage (17) der Produktionsanlage (1). Über die Links (18) kann man zu den eigenen Homepages (17) der jeweiligen intelligenten Anlagenkomponenten (3) gelangen und dort weiter in den unterlegten Homepages blättern. Figur 4 zeigt eine beispielsweise Gliederungsstruktur der Homepages (17).

Die verschiedenen intelligenten Applikationskomponenten (3) haben vorzugsweise jeweils einen eigenen WEB-Server (13). Die WEB-Server (13) und die zugehörigen Rechner (14) sind vorzugsweise mit einem so großen Datenspeicher ausgerüstet, dass sie zumindest ihre erste eigene Homepage (17) und die eventuell unterlegten Homepages intern speichern und verwalten können. Alternativ können bei einfachen Rechnern (14), die lediglich aus einer Mikroprozessorsteuerung mit einem begrenzten internen Speicher bestehen, die unterlegten Homepages (17) auch auf andere WEB-Server (13) ausgelagert sein.

Die Steuerungsteile (25) oder Rechner (14) der intelligenten Applikationskomponenten (3) können mit ihren zugehörigen Geräteteilen (26) oder Werkzeugen (11,27), z.B. Aktoren, Sensoren oder dgl., ebenfalls über Fast Ethernet-Leitungen und entsprechende Schnittstellen für den Signalaustausch steuerungstechnisch verbunden sein. Ein WEB-Steuersystem mit Datennetz besteht damit auch zwischen den Steuerteilen (25) und Geräteteilen (26).

Figur 7 zeigt dies z.B. anhand eines Schweißgeräts (27) mit entsprechender Intelligenz (12) an der Hand des Roboters (4) und der über ein Datennetz (16) mit Fast Ethernet-Leitung angeschlossenen Schutzgas-Schweißsteuerung (6), die ihrerseits in der vorbeschriebenen Weise über das WEB-Steuersystem (2) mit der Anlagensteuerung (10) steuerungstechnisch verbunden ist. Desgleichen stellt der Roboter (4) bzw. auch dessen Einzelkomponenten ein intelligentes Geräteteil (26) dar, welches mit dem zugehörigen Steuerungsteil (25), nämlich der Robotersteuerung (5) in der vorgenannten Weise steuerungstechnisch verbunden ist. Die Geräteteile (26) haben dann ebenfalls in ihren Intelligenzen (12), z.B. Embedded-Chips, einen WEB-Server (13) mit einer eigenen Homepage. Die innerhalb der intelligenten Applikationskomponenten (3) bestehenden Datennetze und WEB-Steuersysteme können mit dem anlagenübergreifenden Datennetz (16) und WEB-Steuersystem (2) vernetzt bzw. darin integriert sein.

Die.Anlagensteuerung (10) ist mit den vorerwähnten Werkzeugen (11) über das Fast Ethernet-Netzwerk (16) verbunden. Wenn die Werkzeuge (11) mit einer Intelligenz (12), insbesondere einem Embedded-Chip, ausgestattet sind, kann auf dessen WEB-Server (13) je nach Speicherplatz zumindest die erste Homepage (17) der Werkzeuge (11) gespeichert sein. Die restlichen Homepages sind dann z.B. auf dem WEB-Server (13) der Anlagensteuerung (10) ausgelagert. Die Schnittstelle (15) des Werkzeugs (11) oder das Interface (24) kann mit einer zusätzlichen Intelligenz ausgestattet sein, die als Umsetzer fungiert, der die Bit-Signale der Werkzeuge (11) in das TCP/IP-Protokoll des Fast Ethernet-Netzwerks (16) umsetzt und umgekehrt. In entsprechender Weise können auch die vorbeschriebenen Geräteteile (26), z.B. Werkzeuge (27), Roboterteile etc., der anderen intelligenten Applikationskomponenten (3) ausgestattet und ausgebildet sein.

Das WEB-Steuerungssystem (2) mit den angeschlossenen WEB-Servern (13) der intelligenten Applikationskomponenten (3) ermöglicht eine Anzeige der Betriebszustände der einzelnen Applikationskomponenten (3) und deren Bedienung in der Betriebsart "manuell". Außerdem ist über das WEB-Steuerungssystem (2) und das Datennetz (16) auch eine automatische Steuerung der intelligenten Applikationskomponenten (3) möglich, was von der Anlagensteuerung (10) aus geschieht.

Die manuelle Beeinflussung und insbesondere Steuerung der intelligenten Anlagenkomponenten (3). untereinander erfolgt über die Homepages (17) und deren Links (18). Von der Homepage (17) auf dem Anzeige- und Bediengerät (22), z.B. einem PC-Bildschirm, der intelligenten Applikationskomponente(n) (3) kann auf die Homepage (17) jeder anderen intelligenten Applikationskomponente (3) zugegriffen und der dortige Komponentenzustand beobachtet werden.

Manuell bedient und gesteuert werden kann die Produktionsanlage (1) grundsätzlich von jeder Homepage (17) auf jedem WEB-Server (13). Aus Sicherheitsgründen oder aus anderen Gründen kann diese Bedien- und Steuermöglichkeit jedoch eingeschränkt sein, indem dies z.B. nur von denjenigen WEB-Servern (13) aus möglich ist, von deren Standort aus eine ungestörte Sichtverbindung zu der bedienten oder gesteuerten Anlagenkomponente (3) besteht.

Wie Figur 2 verdeutlicht, hat eine Homepage (17) mehrere standardisierte Grundbestandteile und Funktionen, die z.B. über dynamische Felder in der unteren horizontalen Bildleiste dargestellt sind. Ausgelöst werden durch diese dynamischen Felder (18) Funktionen und Links für Diagnose, für die Steuerung, für Parametereinstellungen, für eine Produktbeschreibung, für Bedien- und Programmierwerkzeuge, für Hilfe und für den Rücksprung auf die vorherige Homepage. Darüber hinaus können weitere Felder vorhanden sein.

Das Steuerungsprogramm der einzelnen intelligenten Applikationskomponenten (3) läuft auf dem jeweiligen zugehörigen Steuerungsrechner (14). Der WEB-Server (13) setzt die über das Fast Ethernet-Netzwerk (16) von der Anlagensteuerung (10) empfangenen Bedien- und Steuersignale in Signale um, die vom Steuerungsrechner (14) und seinem Steuerungsprogramm verarbeitet werden. Hierfür können individuelle oder allgemeine Treiber vorhanden sein, die an den WEB-Servern (13) der einzelnen intelligenten Anlagenkomponenten (3) und/oder bei der Anlagensteuerung (10) bzw. deren WEB-Server (13) gespeichert sind. Analog funktioniert auch die interne Steuerung der intelligenten Geräteteile (26) der Anlagenkomponenten (3) durch deren Steuerungsteile (25) bzw. Rechner (14).

Die manuelle Bedienung der einzelnen intelligenten Anlagenkomponenten (3) kann u.U. nur über die Zwischenschaltung der Anlagensteuerung (10) erfolgen. Dies gilt insbesondere, wenn die Produktionsanlage (1) im Automatikbetrieb läuft und ein manueller Eingriff mit der Anlagenfunktion und der Funktion der anderen Anlagenkomponenten (3) abgestimmt werden muss. Eine solche Abstimmung kann u.U. auch im Handbetrieb erforderlich sein, um Kollisionen oder dergleichen zu vermeiden.

Die Bedienung, Steuerung und Programmierung bzw. Parametrierung der intelligenten Applikationskomponenten (3) über die Homepages (17) kann in unterschiedlicher Weise und mit unterschiedlichem Umfang erfolgen. Hierbei kann z.B. ein Ein- und Ausschalten einer Applikationskomponente (3) über entsprechende Buttons und dynamische Felder (18) in der Homepage (17) erfolgen. Ferner können auch Programme, Parameter, Betriebsmodi oder dergleichen angewählt und geändert oder eingestellt werden. Hierbei können Bewegungsabläufe, Funktionen etc. geändert, ergänzt oder neu generiert werden. Bei den Robotern (4) kann eine Bewegung der einzelnen Achsen per Handbetrieb erfolgen.

Über das WEB-Steuerungssystem (2) ist in der bevorzugten Ausführungsform grundsätzlich per Fernsteuerung die gleiche Beeinflussung der intelligenten Applikationskomponenten (3) möglich, wie sie auch an der jeweils zugehörigen Steuerung vor Ort und direkt vorgenommen werden kann. Die Einhaltung der entsprechenden Sicherheitsvorschriften wird dabei vorausgesetzt.

Außerdem bieten die Homepages (17) die Möglichkeit für eine vor Ort stattfindende Diagnose und auch für eine Ferndiagnose, die mittels Anschluss an das World-wide-web (www) durchgeführt werden kann. Im Rahmen der Diagnose ist auch eine Wartung, insbesondere eine Fernwartung durchführbar. Vorzugsweise ist zumindest der WEB-Server (13) der Anlagensteuerung (10) über mindestens eine weitere Schnittstelle (15) an das World-wide-web angeschlossen.

Die Produktionsanlage (1) kann automatisch über die Anlagensteuerung (10) und die anderen angeschlossenen Steuerungen (6,7,8,9) gesteuert werden. Der Signalaustausch zwischen der Anlagensteuerung (10) und den anderen intelligenten Applikationskomponenten (3) erfolgt über die WEB-Server (13) und das Datennetz (16) mit dem TCP/IP-Protokoll. Beim Sender werden die Steuersignale in das TCP/IP-Protokoll umgesetzt und beim Empfänger entsprechend in die Steuersignale für die Rechnersteuerungen (14) der intelligenten Applikationskomponente (3) zurückkonvertiert. Die Übertragung der Steuersignale im Hand- und Automatikbetrieb und die Verarbeitung in den Rechnersteuerungen (14) erfolgt in einer für die Personenund Gerätesicherheit erforderlichen Geschwindigkeit. Mittels Browser werden auf den Homepages (17) die jeweiligen Zustände und Funktionen der intelligenten Applikationskomponenten (3) angezeigt. Die Homepages (17) werden über entsprechende Browser aufgerufen.

Die intelligenten Applikationskomponenten (3) werden mit den zugehörigen WEB-Servern (13) von deren Herstellern soweit standardisiert und vorbereitet, dass sich bei der Installation nach dem Prinzip von Plug-and-play weitgehend selbständig in das Datennetz (16) und das WEB-Steuerungssystem (2) einfügen. Hierbei werden auch die zugehörigen Homepages (17) von den Herstellern standardisiert und vollständig mit Betriebsanleitungen, Ersatzteillisten, Systembeschreibung und dgl. Informationen ausgerüstet, dass der Installations- und Dokumentationsaufwand für die Projektierung und den Betreiber der Produktionsanlage (1) minimiert wird.

Abwandlungen der gezeigten Ausführungsform sind in verschiedener Weise möglich. Im gezeigten Ausführungsbeispiel ist das Datennetz (16) als anlageninternes Netz ausgebildet. Es kann dazu aber auch eine über die Produktionsanlage (1) hinaus reichende gleichartige Vernetzung, z.B. ein Werksnetz, vorhanden sein, mit der verschiedene Produktionsanlagen (1) am gleichen Standort oder an unterschiedlichen Standorten verbunden sind. Darüber hinaus kann auch der vorerwähnte Anschluss an das world-wide-web gegeben sein. Die im Ausführungsbeispiel gezeigten und beschriebenen intelligenten Applikationskomponenten (3) können in Zahl, Anordnung und Ausbildung beliebig variieren und vom gezeigten Ausführungsbeispiel abweichen. Desgleichen ist auch die Gestaltung der Homepages (17) und der dynamischen Felder (18) beliebig veränderbar. Bei den intelligenten Applikationskomponenten (3) kann die interne Steuerung ihrer Geräteteile (26) alternativ auch auf konventionelle Weise mit einem geeigneten Bussystem, z.B. einem Profi-Bus oder dgl. erfolgen.

### BEZUGSZEICHENLISTE

- 1: Produktionsanlage, Produktionszelle
- 2: WEB-Steuerungssystem
- 3: intelligente Applikationskomponente
- 4: Roboter
- 5: Robotersteuerung
- 6: Schutzgas-Schweißsteuerung
- 7: Bolzenschweißsteuerung
- 8: Widerstands-Schweißsteuerung
- 9: Klebesteuerung
- 10: Anlagensteuerung, softwaregestützte Ablaufsteuerung
- 11: Werkzeug, Spannwerkzeug
- 12: Intelligenz, Embedded-Chip
- 13: WEB-Server
- 14: Rechner, PC, Microprozessor
- 15: Schnittstelle, Fast Ethernet-Karte
- 16: Datennetz, Fast Ethernet-Netzwerk
- 17: Homepage
- 18: dynamisches Feld, Button, Link
- 19: Bearbeitungsbereich
- 20: Bearbeitungsbereich
- 21: Bearbeitungsbereich
- 22: Anzeige- und Bediengerät
- 23: Anlagen-Server
- 24: Interface
- 25: Steuerungsteil
- 26: Geräteteil
- 27: Werkzeug, Schweißgerät

## Patentansprüche

1. Verfahren zur Steuerung einer industriellen Produktionsanlage (1), insbesondere zur-Fertigung von Bauteilen von Fahrzeugrohkarosserien, bestehend aus ein oder mehreren intelligenten Applikationskomponenten (3), insbesondere mehrachsigen Robotern (4), Schweiß-, Klebe- oder Spanneinrichtungen oder dgl., und mindestens einer Anlagensteuerung (10), welche mit einem WEB-Server (13) mit mindestens einer eigenen Homepage (17) gemäß Internet-Standard ausgestattet ist, **dadurch gekennzeichnet, dass** die Anlagensteuerung (10) die intelligenten Applikationskomponenten (3) durch ein WEB-Steuerungssystem (2) und ein Datennetz (16) steuert, wobei die intelligenten Applikationskomponenten (3) mit jeweils einem WEB-Server (13) mit mindestens einer eigenen Homepage (17) gemäß Internet-Standard ausgerüstet sind.

2. Verfahren nach Anspruch 1, **dadurch gekennzeichnet, dass** die Steuerungsteile (25) der intelligenten Applikationskomponenten (3) die zugehörigen Geräteteile (26) durch ein WEB-Steuerungssystem (2) und ein Datennetz (16) steuern, wobei die Geräteteile (26) mit einer eigenen Intelligenz (12) oder mit einem intelligenten Interface (24) und jeweils einem WEB-Server (13) mit mindestens einer eigenen Homepage (17) gemäß Internet-Standard ausgerüstet sind.

3. Verfahren nach Anspruch 1 oder 2, **dadurch gekennzeichnet, dass** alle Anlagensteuerung(en) (10) und alle Steuerungsteile (25) und Geräteteile (26) der intelligenten Applikationskomponenten (3) der industriellen Produktionsanlage (1) durch ein gemeinsames WEB-Steuerungssystem (2) und Datennetz (16) untereinander verbunden werden und miteinander kommunizieren.

4. Industrielle Produktionsanlage, insbesondere zur Fertigung von Bauteilen von Fahrzeugrohkarosserien, bestehend aus ein oder mehreren intelligenten Applikationskomponenten (3), insbesondere mehrachsigen Robotern (4), Schweiß-, Klebe- oder Spanneinrichtungen oder dgl., und mindestens einer Anlagensteuerung (10), welche mit einem WEB-Server (13) mit mindestens einer eigenen Homepage (17) gemäß Internet-Standard ausgestattet ist, **dadurch gekennzeichnet, dass** die Anlagensteuerung (10) und die intelligenten Applikationskomponenten (3) durch ein WEB-Steuerungssystem (2) und ein Datennetz (16) steuertechnisch verbunden sind, wobei die intelligenten Applikationskomponenten (3) mit jeweils einem WEB-Server (13) mit mindestens einer eigenen Homepage (17) gemäß Internet-Standard ausgerüstet sind.

5. Produktionsanlage nach Anspruch 4, **dadurch gekennzeichnet, dass** die intelligenten Applikationskomponenten (3) ein Steuerungsteil (25) und ein Geräteteil (26) aufweisen, die durch ein WEB-Steuerungssystem (2) und ein Datennetz (16) steuertechnisch verbunden sind, wobei das Geräteteil. (26) mit einer eigenen Intelligenz (12) oder mit einem intelligenten Interface (24) und jeweils einem WEB-Server (13) mit mindestens einer eigenen Homepage (17) gemäß Internet-Standard ausgerüstet ist.

6. Produktionsanlage nach Anspruch 4 oder 5, **dadurch gekennzeichnet, dass** alle Anlagensteuerung(en) (10) und alle Steuerungsteile (25) und Geräteteile (26) der intelligenten Applikationskomponenten (3) der industriellen Produktionsanlage (1) durch ein gemeinsames WEB-Steuerungssystem (2) und Datennetz (16) untereinander verbunden sind.

7. Produktionsanlage nach Anspruch 4, 5 oder 6, **dadurch gekennzeichnet, dass** die Homepage (17) ein oder mehreren Links (18) aufweist.

8. Produktionsanlage nach einem der Ansprüche 4 bis 7, **dadurch gekennzeichnet, dass** ein oder mehrere Anzeige- und Bediengeräte (22) mit einem Browser zur Darstellung und Bedienung der Homepages (17) an das Datennetz (16) angeschlossen sind.

9. Produktionsanlage nach einem der Ansprüche 4 bis 8, **dadurch gekennzeichnet, dass** das Datennetz (16) als Fast Ethernet-Netzwerk ausgebildet ist und die angeschlossenen Applikationskomponenten (3) und WEB-Server (13) Schnittstellen (15) für das TCP/IP-Protokoll aufweisen.

10. Produktionsanlage nach einem der Ansprüche 4 bis 9, **dadurch gekennzeichnet, dass** die WEB-Server (13) mehrere hierarchisch gegliederte Homepages (17) aufweisen.

11. Produktionsanlage nach einem der Ansprüche 4 bis 10, **dadurch gekennzeichnet, dass** die Homepages (17) eines WEB-Servers (13) teilweise auf andere WEB-Server (13) ausgelagert sind.

12. Produktionsanlage nach einem der Ansprüche 4 bis 11, **dadurch gekennzeichnet, dass** die Homepages (17) Anzeige und/oder Steuerelemente für die zugehörige Applikationskomponente (3) aufweisen.

13. Produktionsanlage nach einem der Ansprüche 4 bis 12, **dadurch gekennzeichnet, dass** die Steuerungsteile (25) und die zugehörigen Geräteteile (26) oder Werkzeuge (11,27) der intelligenten Applikationskomponenten (3) über Fast-Ethernet-Leitungen miteinander verbunden sind.

14. Produktionsanlage nach einem der Ansprüche 4 bis 13, **dadurch gekennzeichnet, dass** das Datennetz (16) über die Produktionsanlage (1) hinausreicht oder an ein gleichartiges anderes Datennetz, insbesondere ein Werksnetz oder das World-wide-web, angeschlossen ist, wobei die dort angeschlossenen und außerhalb der Produktionsanlage (1) befindlichen Anzeige- und Bediengeräte (22) Zugriff auf die Homepages (17) der innerhalb der Produktionsanlage (1) befindlichen intelligenten Applikationskomponenten (3) haben.

## Claims

1. Method for the control of an industrial production plant (1), in particular for the manufacture of structural members of vehicle shells, consisting of one or more intelligent application components (3), in particular multi-axis robots (4), welding, gluing or clamping devices or the like, and at least one plant control system (10) which is equipped with a web server (13) with at least one home page (17) of its own in accordance with internet standards, **characterised in that** the plant control system (10) controls the intelligent application components (3) by a web control system (2) and a data network (16), wherein the intelligent application components (3) are in each case fitted with a web server (13) with at least one home page (17) of its own in accordance with internet standards.

2. Method according to claim 1, **characterised in that** the control parts (25) of the intelligent application components (3) control the associated equipment parts (26) by a web control system (2) and a data network (16), wherein the equipment parts (26) are in each case fitted with their own intelligence (12) or with an intelligent interface (24) and in each case a web server (13) with at least one home page (17) of its own in accordance with internet standards.

3. Method according to claim 1 or 2, **characterised in that** all plant control system(s) (10) and all control parts (25) and equipment parts (26) of the intelligent application components (3) of the industrial production plant (1) are connected to each other and communicate with each other by a common web control system (2) and data network (16).

4. Industrial production plant (1), in particular for the manufacture of structural members of vehicle shells, consisting of one or more intelligent application components (3) , in particular multi-axis robots (4), welding, gluing or clamping devices or the like, and at least one plant control system (10) which is equipped with a web server (13) with at least one home page (17) of its own in accordance with internet standards, **characterised in that** the plant control system (10) and the intelligent application components (3) are connected with respect to control technology by a web control system (2) and a data network (16), wherein the intelligent application components (3) are in each case fitted with a web server (13) with at least one home page (17) of its own in accordance with internet standards.

5. Production plant according to claim 4, **characterised in that** the intelligent application components (3) comprise a control part (25) and an equipment part (26) which are connected with respect to control technology by a web control system (2) and a data network (16), wherein the equipment part (26) is fitted with its own intelligence (12) or with an intelligent interface (24) and in each case a web server (13) with at least one home page (17) of its own in accordance with internet standards.

6. Production plant according to claim 4 or 5, **characterised in that** all plant control system(s) (10) and all control parts (25) and equipment parts (26) of the intelligent application components (3) of the industrial production plant (1) are connected to each other by a common web control system (2) and data network (16).

7. Production plant according to claim 4, 5 or 6, **characterised in that** the home page (17) has one or more links (18).

8. Production plant according to any of claims 4 to 7, **characterised in that** one or more indicator and operating units (22) with a browser for display and operation of the home pages (17) are connected to the data network (16).

9. Production plant according to any of claims 4 to 8, **characterised in that** the data network (16) is designed as a Fast Ethernet network, and the connected application components (3) and web servers (13) comprise interfaces (15) for the TCP/IP protocol.

10. Production plant according to any of claims 4 to 9, **characterised in that** the web servers (13) comprise several hierarchically divided home pages (17).

11. Production plant according to any of claims 4 to 10, **characterised in that** the home pages (17) of one web server (13) are partially transferred to other web servers (13).

12. Production plant according to any of claims 4 to 11, **characterised in that** the home pages (17) comprise indicator and/or control elements for the associated application component (3).

13. Production plant according to any of claims 4 to 12, **characterised in that** the control parts (25) and the associated equipment parts (26) or tools (11, 27) of the intelligent application components (3) are connected to each other via Fast Ethernet lines.

14. Production plant according to any of claims 4 to 13, **characterised in that** the data network (16) extends beyond the production plant (1) or is connected to another, identical data network, in particular a works network or the world wide web, wherein the indicator and operating units (22) which are connected there and located outside the production plant (1) have access to the home pages (17) of the intelligent application components (3) which are located inside the production plant (1).

## Revendications

1. Procédé de commande d'une installation de production industrielle (1), notamment pour la fabrication d'éléments de carrosseries brutes de véhicule, constituée d'un ou plusieurs éléments d'application intelligents (3), notamment de robots (4) à plusieurs axes, de dispositifs de soudage, de collage ou de serrage ou autres, et d'au moins une commande d'installation (10) qui est équipée d'un serveur WEB (13) avec au moins une page d'accueil particulière (17) selon le standard internet, **caractérisé par le fait que** la commande d'installation (10) commande les éléments d'application intelligents (3) via un système de commande WEB (2) et un réseau de données (16), les éléments d'application intelligents (3) étant équipés chacun d'un serveur WEB (13) avec au moins une page d'accueil particulière (17) selon le standard internet.

2. Procédé selon la revendication 1, **caractérisé par le fait que** les parties de commande (25) des éléments d'application intelligents (3) commandent les parties d'appareils (26) associées via un système de commande WEB (2) et un réseau de données (16), les parties d'appareils (26) étant équipées d'une intelligence particulière (12) ou d'une interface intelligente (24) et à chaque fois d'un serveur WEB (13) avec au moins une page d'accueil particulière (17) selon le standard internet.

3. Procédé selon la revendication 1 ou 2, **caractérisé par le fait que** l'ensemble de la ou des commandes d'installation (10) et toutes les parties de commande (25) et parties d'appareils (26) des éléments d'application intelligents (3) de l'installation de production industrielle (1) sont reliées et communiquent entre elles via un système de commande WEB (2) et un réseau de données (16) communs.

4. Installation de production industrielle, notamment pour la fabrication d'éléments de carrosseries brutes de véhicule, constituée d'un ou plusieurs éléments d'application intelligents (3), notamment de robots (4) à plusieurs axes, de dispositifs de soudage, de collage ou de serrage ou autres, et d'au moins une commande d'installation (10) qui est équipée d'un serveur WEB (13) avec au moins une page d'accueil particulière (17) selon le standard internet, **caractérisée par le fait que** la commande d'installation (10) et les éléments d'application intelligents (3) sont reliés quant à la technique de commande via un système de commande WEB (2) et un réseau de données (16), les éléments d'application intelligents (3) étant équipés chacun d'un serveur WEB (13) avec au moins une page d'accueil particulière (17) selon le standard internet.

5. Installation de production selon la revendication 4, **caractérisée par le fait que** les éléments d'application intelligents (3) comportent une partie de commande (25) et une partie d'appareil (26) qui sont reliées quant à la technique de commande via un système de commande WEB (2) et un réseau de données (16), la partie d'appareil (26) étant équipée d'une intelligence particulière (12) ou d'une interface intelligente (24) et à chaque fois d'un serveur WEB (13) avec au moins une page d'accueil particulière (17) selon le standard internet.

6. Installation de production selon la revendication 4 ou 5, **caractérisée par le fait que** l'ensemble de la ou des commandes d'installation (10) et toutes les parties de commande (25) et parties d'appareils (26) des éléments d'application intelligents (3) de l'installation de production industrielle (1) sont reliées entre elles via un système de commande WEB (2) et un réseau de données (16) communs.

7. Installation de production selon la revendication 4, 5 ou 6, **caractérisée par le fait que** la page d'accueil (17) comporte un ou plusieurs liens (18).

8. Installation de production selon l'une des revendications 4 à 7, **caractérisée par le fait qu'**un ou plusieurs appareils d'affichage et de contrôle (22) sont raccordés au réseau de données (16) avec un navigateur destiné à la présentation et au contrôle des pages d'accueil (17).

9. Installation de production selon l'une des revendications 4 à 8, **caractérisée par le fait que** le réseau de données (16) est conçu comme un réseau Fast Ethernet et que les éléments d'application (3) raccordés et les serveurs WEB (13) raccordés comportent des interfaces (15) pour le protocole TCP/IP.

10. Installation de production selon l'une des revendications 4 à 9, **caractérisée par le fait que** les serveurs WEB (13) comportent plusieurs pages d'accueil (17) hiérarchisées.

11. Installation de production selon l'une des revendications 4 à 10, **caractérisée par le fait que** les pages d'accueil (17) d'un serveur WEB (13) sont partiellement transférées sur d'autres serveurs WEB (13).

12. Installation de production selon l'une des revendications 4 à 11, **caractérisée par le fait que** les pages d'accueil (17) comportent des éléments d'affichage et/ou de commande pour les éléments d'application (3) associés.

13. Installation de production selon l'une des revendications 4 à 12, **caractérisée par le fait que** les parties de commande (25) et les parties d'appareils (26) associées ou des outils (11, 27) des éléments d'application intelligents (3) sont reliés entre eux par l'intermédiaire de liaisons Fast Ethernet.

14. Installation de production selon l'une des revendications 4 à 13, **caractérisée par le fait que** le réseau de données (16) va au-delà de l'installation de production (1) ou est raccordé à un autre réseau de données de même type, notamment un réseau commercial ou le World-wide-web, les appareils d'affichage et de contrôle (22) qui sont raccordés là et qui se trouvent en dehors de l'installation de production (1) ayant alors accès aux pages d'accueil (17) des éléments d'application intelligents (3) qui se trouvent à l'intérieur de l'installation de production (1).
